# EUROPÄISCHE PATENTSCHRIFT

(11) **EP 1 148 437 B1**
(45) Veröffentlichungstag und Bekanntmachung des Hinweises auf die Patenterteilung: **17.11.2010**
(21) Anmeldenummer: 01107200.6
(22) Anmeldetag: 22.03.2001
(51) Int. Cl.: G06K 7/00

(54) **Identifikationssystem**
Identification system
Système d'identification

(30) Priorität: 20.04.2000 DE 10019657
(43) Veröffentlichungstag der Anmeldung: 24.10.2001
(73) Patentinhaber: Scheuermann, Carl H., 97072 Würzburg (DE); Uhlmann, Günter, 97204 Höchberg (DE)
(72) Erfinder: Scheuermann, Carl H., 97072 Würzburg (DE); Uhlmann, Günter, 97204 Höchberg (DE)
(74) Vertreter: Lohr, Georg

(56) Entgegenhaltungen:
- EP-A- 0 944 014
- DE-A- 19 935 146
- US-A- 5 352 877

## Beschreibung

Die Erfindung betrifft ein Identifikationssystem gemäß des Anspruchs 1. Das Identifikationssystem ist u.a. mit einer Steuereinheit und einem von dieser Einheit räumlich entfernten Transponder-Element versehen, bei dem
- ein Hauptsender der Steuereinheit mittels eines Hauptoszillators und einer von diesem beaufschlagten Hauptantenne ein elektromagnetisches Hauptfeld erzeugt,
- das Transponder-Element eine zeitlich variable Dämpfung dieses Hauptfeldes bewirkt, wobei der zeitliche Verlauf dieser Dämpfung abhängig von einer im Transponder-Element gespeicherten Codefolge ist, und
- ein Hauptempfänger der Steuereinheit ein Signal generiert, dessen zeitlicher Verlauf dem zeitlichen Verlauf der bewirkten Dämpfung des Hauptfeldes entspricht.

Identifikationssysteme sind aus dem Stand der Technik bekannt und werden beispielsweise im Rahmen elektronischer Schließsysteme verwendet, wobei hier die Steuereinheit einschließlich Hauptoszillator und Hauptantenne in der Regel Tür- bzw. schloßseitig angeordnet werden, während das Transponder-Element gewissermaßen den Schlüssel zum Öffnen des Schlosses darstellt.

In einem Transponder-Element ist eine Codefolge gespeichert, die im Falle der Aktivierung des Transponder-Elements ausgelesen wird. Durch das serielle Auslesen der Codefolge wird in einer der Codefolge entsprechenden zeitlichen Reihenfolge mittels eines Schalters die Spule eines im Transponder-Element angeordneten Schwingkreises kurzgeschlossen, wodurch dem von der Hauptantenne der Steuereinheit erzeugten elektromagnetischen Hauptfeld entsprechend der jeweiligen Schalterstellung entweder mehr oder weniger Energie entzogen wird. Mittels des Hauptempfängers der Steuereinheit kann dann die zeitliche Abfolge der bewirkten Dämpfung ermittelt werden, woraufhin diese zeitliche Abfolge mit einer in der Steuereinheit gespeicherten Codefolge verglichen wird. Sofern diese gespeicherte Codefolge mit der Codefolge des Transponders bzw. mit der zeitlichen Abfolge der durch den Transponder bewirkten Dämpfung identisch ist, wird eine jeweils gewünschte Funktion ausgelöst, beispielsweise ein Schloß geöffnet.

Für den Betrieb eines vorstehend beschriebenen, aus dem Stand der Technik bekannten Identifikationssystems ist es nötig, die Steuereinheit mit Energie zu versorgen, während die Funktion des Transponder-Elements ohne eigene Energiequelle bewirkt werden kann. Problematisch bei bekannten Identifikationssystemen ist die Tatsache, daß die Steuereinheit "merken" muß, wenn sich ein Transponder-Element in der Nähe befindet. Erst anschließend kann untersucht werden, ob es sich um einen Transponder-Element mit einer Codefolge handelt, die der in der Steuereinheit gespeicherten Codefolge entspricht. Um zu "merken", ob sich ein Transponder-Element in der Nähe der Steuereinheit befindet, ist es nötig, ständig ein elektromagnetisches Feld auszusenden, welches dann von einem Transponder-Element gedämpft wird, wobei dieses ständige Aussenden eines elektromagnetischen Felds zu einem nachteiligen Energieverbrauch führt. Besonders nachteilig ist dieser Energieverbrauch dann, wenn die Steuereinheit mittels einer Batterie oder eines Akkumulators betrieben wird, da in diesem Fall ein häufiges Wechseln der Energiequelle nötig ist.

Aus der DE-A-199 35 146 ist ein berührungsloses Kommunikatlonssystem mit einer Steuereinheit und einem Transponder bekannt. Um die Leistungsaufnahme der Steuereinheit zu senken, hat diese zwei Betriebsmodi. Zunächst wird die Annäherung eines Transponders an die Steuereinheit detektiert. Dazu sendet die Steuereinheit eine Radiowelle, die schwächer als die Radiowelle ist, welche sie gewöhnlich für die Kommunikation überträgt. Ist der Transponder in der Nähe der Steuereinheit, so wird dieser in regelmäßigen intervallen aktiviert und deaktiviert. Der Transponder kann mit der Leistung der schwachen Radiowelle arbeiten und sendet ein Signal, anhand dessen die Steuereinheit die Annäherung des Transponders erkennt.

Die EP-A-0 944 014 zeigt eine Kommunikationsschaltung mit einer Aufweckschaltung zur Reduktion der Leistungsaufnahme. Wird durch die Aufweckschaltung ein Transponder erkannt, so schaltet diese das System von einem Detektionsmodus in einen Kommunikationsmodus. Im Detektionsmodus wird einem Antennenverstärker ein Signal aus einem kurzen Rechteckimpuls mit einer Pulsdauer von 2µs und mit einer Frequenz von 50 Hz zugeführt. Dadurch wird eine Reduzierung der Leistungsaufnahme der Kommunikationsschaltung erreicht, weil während der Pause von 19,998ms keine Leistung emittiert wird. Die Leistungsreduktion resultiert nur aus dem kurzen Puls (2µs) zu Pause(∼20ms) Verhältnis, also dem intermittierenden Betrieb des Senders. Die Pulslänge des kurzen Pulses ist auf die Eigenfrequenz des Transponders abgestimmt, daher wird der Transponder durch die kurzen Pulse aktiviert.

Auch die US 6 352 877 zeigt eine Aufweckschaltung zur Reduzierung der Leistungsaufnahme. Das der Schaltung zugrunde liegende Verfahren beruht im Wesentlichen darauf, dass ein Sender ein Signal emittiert und die Dämpfung des Signals gemessen wird. Ist kein Transponder in der Nähe der Antenne, dann wird das Signal nicht gedämpft und der Sender wird wieder abgeschaltet. Wird ein Transponder detektiert, so wird der Sender weiterbetrieben, bis der Transponder aus dem Sendebereich entfernt wurde. Die Reduzierung der Leistungsaufnahme beruht auch hier auf dem intermittierenden Betrieb des Senders.

D4 beschreibt ein sogenanntes "transaction system" aus einem Terminal und einem Token genannten Transponder. Terminal und Transponder kommunizieren drahtlos. Hierzu hat das Terminal einen Hauptsender aus einer Frequenzmodulationsstufe und zwei nachgeschalteten Verstärkern die einen LC-Schwingkreis anregen. Der Transponder hat zwei Spulen, um den Transponder transformatorisch mit der Spule des LC-Schwingkreises zu koppeln. Dadurch wird der Transponder mit Energie versorgt. Um den Energieverbrauch des Terminals zu minimieren wird die Endstufe des Hauptsenders abgeschaltet, wenn kein Transponder im magnetischen Feld der Spule ist. Stattdessen wird der LC-Schwingkreis von einem "Low Power Oszillator" gespeist. Wenn der Transponder in die Nähe der Spule des LC-Schwingkreises gebracht wird, dann wird über transformatorische Kopplung der Spulen des Transponders mit der Spule des LC-Schwingkreises die Spannung am LC-Schwingkreis gedämpft, was durch eine Aktivierungsschaltung erkannt wird, welche daraufhin die Endstufe des Hauptsenders einschaltet. Die Übertragung von Daten von dem Transponder zu dem Terminal erfolgt durch Amplitudenmodulation. Zum Empfang dieser Daten überwacht eine Empfängerschaltung aus dem LC-Schwingkreis, einem Tiefpassfilter, einem nachgeschalteten Verstärker und zwei Kornparatorstufen die Spannung am LC-Schwingkreis.

Eine Aufgabe der Erfindung besteht darin, ein Identifikationssystem der eingangs genannten Art dahingehend zu verbessern, daß der Energieverbrauch der Steuereinheit reduziert wird.

Erfindungsgemäß wird diese Aufgabe dadurch gelöst, daß zusätzlich zum Hauptsender ein Hilfssender mit einem, eine Hilfsantenne beaufschlagenden Hilfsoszillator vorgesehen ist, wobei die Hilfsantenne ein elektromagnetisches Hilfsfeld erzeugt, dessen Energie zumindest um den Faktor 100, insbesondere zumindest um dem Faktor 1000 geringer ist, als die Energie des Hauptfeldes, und daß zusätzlich zum Hauptempfänger ein Hilfsempfänger zur Ermittlung einer durch das Transponder-Element bewirkten Dämpfung des Hilfsfeldes vorgesehen ist.

Durch die erfindungsgemäße Vorsehung von Hilfssender und Hilfsempfänger wird es möglich, die Steuereinheit immer dann mit einem deutlich reduzierten Energiebedarf zu betreiben, wenn lediglich festgestellt werden soll, ob sich ein Transponder-Element in der Nähe der Steuereinheit befindet oder nicht. Erst wenn erkannt wurde, daß ein Transponder-Element in der Nähe der Steuereinheit vorhanden ist, wird die Steuereinheit mit höherer Energie betrieben und der Hauptsender zugeschaltet, um auf diese Weise das Auslesen des Codes aus dem Transponder-Element zu aktivieren. Das erfindungsgemäße Identifikationssystem unterscheidet also zwischen einer Annäherungserkennung, während derer lediglich festgestellt werden soll, ob sich irgendein Transponder-Element in der Nähe der Steuereinheit befindet und einer Codeerkennung, mittels welcher festgestellt werden soll, ob die Codefolge eines in der Nähe der Steuereinheit befindlichen Transponder-Elements der in der Steuereinheit gespeicherten Codefolge entspricht. Während der Phase der Annäherungserkennung kann erfindungsgemäß im Vergleich zur Phase der Codeerkennung mit deutlich reduzierter Energie seitens des Steuersystems gearbeitet werden, wobei hier während der Annäherungserkennung ohne weiteres eine Energiereduzierung um einen Faktor 100 oder sogar 1000 erreichbar ist.

Bevorzugt wird in einem erfindungsgemäßen Identifikationssystem eine Aktivierungsschaltung für den Hauptsender vorgesehen, welche bei Erreichen einer vorbestimmten Dämpfung des Hilfsfeldes eine Aktivierung des Hauptsenders bewirkt. Durch diese Aktivierungsschaltung wird sichergestellt, daß unmittelbar nach einer positiv abgeschlossenen Annäherungserkennung die Phase der Codeerkennung beginnen kann, so daß beispielsweise ein Schloß mit geringstmöglicher zeitlicher Verzögerung betätigbar wird.

Bevorzugt ist die Aktivierungsschaltung derart ausgelegt, daß eine Aktivierung des Hauptsenders dann bewirkt wird, wenn die Spitzenamplituden des Hilfsfeldes, insbesondere die Spitzenamplituden der Magnetfeldkomponente des Hilfsfeldes über eine vorbestimmte Zeitspanne unterhalb eines vorbestimmten Schwellwerts liegen. Alternativ können aber auch beliebige andere Größen des Hilfsfeldes untersucht werden, um eine Aktivierung des Hauptsenders zu bewirken.

Von Vorteil ist es, wenn die Energie des Hilfsfeldes so gering gewählt ist, daß das Hilfsfeld kein Auslesen der im Transponder-Element gespeicherten Codefolge bewirken kann, so daß die Phase der Annäherungserkennung und die Phase der Codeerkennung klar voneinander trennbar sind.

Bevorzugt ist es, wenn die Hauptantenne mit einer Leistung zwischen 10 mW und 1 W, insbesondere zwischen 50 mW und 0,5 W betrieben wird, während die Hilfsantenne beispielsweise mit einer Leistung zwischen 0,01 mW und 5 mW, insbesondere zwischen 0,1 mW und 0,5 mW betreibbar ist.

Eine besonders vorteilhafte Variante des erfindungsgemäßen Identifikationssystems läßt sich dann erreichen, wenn der Hilfssender derart betreibbar ist, daß er abwechselnd in einem Einschalt- und einem Pausenintervall arbeitet. Hierdurch wird erreicht, daß der Hilfssender nicht nur mit deutlich geringerer Energie arbeiten kann als der Hauptsender, sondern daß zudem auch noch eine weitere Energieeinsparung dadurch erreichbar wird, daß der Hilfssender nicht ständig, sondern lediglich intermittierend betrieben wird.

Die Zeitdauer des - praktisch keinen Energieverbrauch erfordernden - Pausenintervalls liegt bevorzugt zwischen 0,05s und 1s, insbesondere zwischen 0,1s und 0,5s und vorzugsweise bei ungefähr 0,25s.

Die Zeitdauer des Einschaltintervalls liegt bevorzugt zwischen 0,01ms und 1ms, insbesondere zwischen 0,05ms und 0,5ms und vorzugsweise bei ungefähr 0,1ms.

Durch die genannten Zeitdauern wird es beispielsweise möglich, den Hilfssender so zu betreiben, daß er während einer Sekunde lediglich 0,4ms aktiv ist.

Die Erfindung läßt sich besonders vorteilhaft dann einsetzen, wenn die Hauptantenne und/oder die Hilfsantenne von einer Batterie oder einem Akkumulator gespeist werden. Jedoch ist auch eine Speisung durch ein Festnetz grundsätzlich denkbar.

Weitere bevorzugte Ausführungsformen der Erfindung sind in den Unteransprüchen angegeben.

Die Erfindung wird nachfolgend unter Bezugnahme auf ein Ausführungsbeispiel anhand der Figuren beschrieben; in diese zeigen:
- Fig. 1: ein Blockschaltbild einer Steuereinheit eines erfindungsgemäß aufgebauten Identifikationssystems, und
- Fig. 2: ein Blockschaltbild eines erfindungsgemäß zum Einsatz gelan- genden Transponder-Elements.

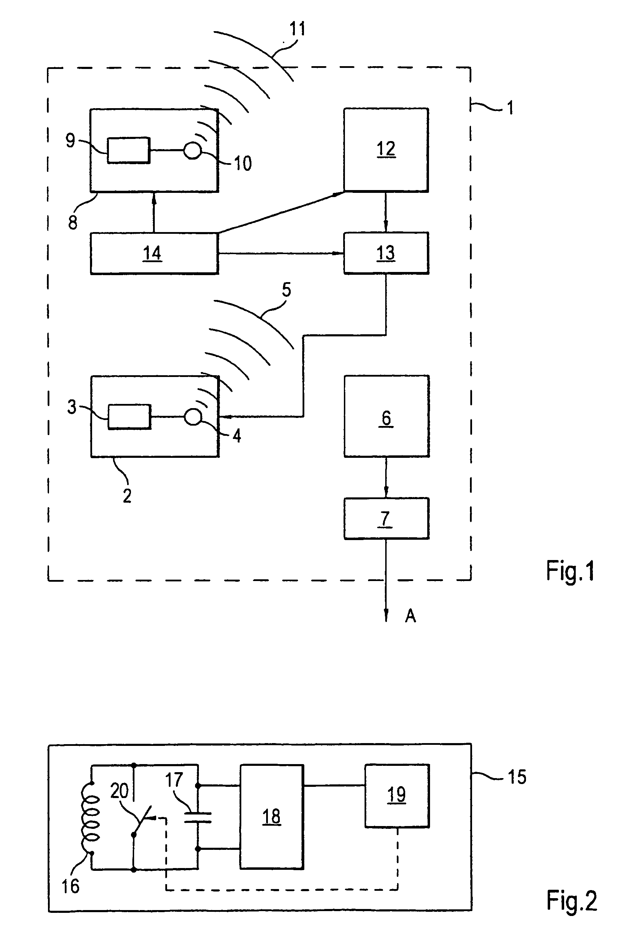

Fig. 1 zeigt eine erfindungsgemäß aufgebaute Steuereinheit 1, welche einen Hauptsender 2 und einen Hilfssender 8 aufweist.

Der Hauptsender 2 besteht im wesentlichen aus einem Hauptoszillator 3, der eine Hauptantenne 4 beaufschlagt, welche ein elektromagnetisches Hauptfeld 5 erzeugt.

Ein Hauptempfänger 6 ist derart ausgelegt, daß er dazu in der Lage ist, eine extern, außerhalb der Steuereinheit 1 bewirkte Dämpfung des Hauptfeldes, bzw. seiner Magnetfeldkomponente, zu messen. Der Hauptempfänger 6 gibt ein dieser Dämpfung entsprechendes Signal an eine Codeerkennungs-Auswerteeinheit 7 weiter, welche bei Erreichen eines vorgegebenen Dämpfungswerts ein Ausgangssignal A abgibt, welches beispielsweise zum Auslösen des Öffnens eines Türschlosses verwendbar ist.

Der Hilfssender 8 besteht im wesentlichen aus einem Hilfsoszillator 9, welcher eine Hilfsantenne 10 beaufschlagt, die ihrerseits ein elektromagnetisches Hilfsfeld 11 erzeugt. Die Energie des Hilfsfeldes 11 liegt deutlich unter derjenigen des Hauptfeldes 5; der Energieunterschied zwischen beiden Felder kann durchaus einige Zehnerpotenzen betragen.

Ferner ist innerhalb der Steuereinheit ein Hilfsempfänger 12 vorgesehen, welcher dazu geeignet ist, die Dämpfung des Hilfsfeldes 11 bzw. die Dämpfung der entsprechenden Magnetfeldkomponente zu messen. Ein dieser Dämpfung entsprechendes Signal wird vom Hilfsempfänger 12 an eine Annäherungerkennungs-Auswerteeinheit 13 weitergegeben, welche bei Erreichen einer vorbestimmten Dämpfung des Hilfsfeldes 11 ein Steuersignal an den Hauptsender 2 absetzt, welcher dann beginnt, das Hauptfeld 5 zur Erkennung des in einem Transponder gespeicherten Codes auszusenden.

Hilfssender 8, Hilfsempfänger 12 sowie Auswerteeinheit 13 sind von einem Impulsgenerator 14 gesteuert, welcher z. B. mit einer Frequenz von 4Hz Impulse einer Impulslänge von 100µs abgibt. Auf diese Weise wird erreicht, daß Hilfssender 8, Hilfsempfänger 12 und Auswerteeinheit 13 jeweils nur intermittierend betrieben werden, wodurch sich eine zusätzliche Energieersparnis erzielen läßt.

Fig. 2 zeigt ein Transponder-Element 15, welches einen aus einer Spule 16 und einem Kondensator 17 aufgebauten Schwingkreis aufweist, dessen Ausgang einem Gleichrichter 18 zugeführt ist. Der Gleichrichter 18 erzeugt demzufolge bei ausreichend starker Schwingung des Schwingkreises 16, 17 eine Gleichspannung, die als Versorgungsspannung eines Speicherbausteins 19 Verwendung findet. Im Speicherbaustein 19 ist eine Code-Folge gespeichert, welche bei Aktivierung des Speicherbausteins 19 mit einer ausreichend hohen Versorgungsspannung seriell ausgelesen wird, wobei diese serielle Code-Folge dann in einer entsprechenden zeitlichen Abfolge einen Schalter 20 öffnet und schließt, welcher in seinem geschlossenen Zustand die Spule 16 kurzschließt. Durch dieses abwechselnde Öffnen und Schließen des Schalters 20 wird dem von der Steuereinheit 1 ausgesandten Hauptfeld 5 abwechselnd mehr bzw. weniger Energie entzogen, so daß eine entsprechende Dämpfung dieses Hauptfeldes 5 auftritt.

Der Verlauf dieser Dämpfung wird dann innerhalb der Steuereinheit 1 ausgewertet und mit einer in der Steuereinheit 1 gespeicherten Code-Folge verglichen. Sofern beide Codes übereinstimmen, gibt dann die bereits beschriebene Codeerkennungs-Auswerteeinheit 7 ein entsprechendes Ausgangssignal A ab.

Das erfindungsgemäße, in den Fig. 1 und 2 beschriebene Identifikationssystem arbeitet wie folgt:
Der Hilfssender 8 sendet immer dann, wenn er vom Impulsgenerator 14 einen Impuls erhält, das Hilfsfeld 11 aus, und die Einheit aus Hilfsempfänger 12 und Annäherungserkennungs-Auswerteeinheit 13 überprüft während dieser Zeitspanne, ob eine bestimmte Dämpfung des Hilfsfelds 5 erreicht wird.

Falls sich ein Transponder-Element 15 nahe genug an den Hilfssender 8 heran bewegt, bewirkt der Schwingkreis 16, 17 das Erreichen einer vorbestimmten Dämpfung des Hilfsfeldes 5, welche in der Annäherungserkennungs-Auswerteeinheit 13 erkannt wird. Der Schalter 20 des Transponder-Elements 15 ist während dieses Prozesses geöffnet. Ein Schließen des Schalters 20 erfolgt nur, wenn Daten aus dem Speicherbaustein 19 ausgelesen werden, was jedoch - wie bereits erläutert - während der Annäherungs-Erkennungsphase nicht geschieht.

Beim Erreichen der genannten Dämpfung des Hilfsfeldes 5 gibt die Auswerteeinheit 13 ein Signal an den Hauptsender 2 ab, welcher dann das Hauptfeld 5 aussendet. Dieses Hauptfeld 5 ist im Vergleich zum Hilfsfeld 11 so stark, daß im Transponder-Element 15 durch den Schwingkreis 16, 17 in Verbindung mit dem Gleichrichter 18 eine ausreichend starke Versorgungsspannung für den Speicherbaustein 19 erzeugt wird, so daß ein Auslesen des im Speicherbaustein 19 gespeicherten Codes erfolgt. Das serielle Auslesen dieses Codes steuert dann in der bereits erläuterten Weise den Schalter 20, so daß das Hauptfeld 5 zeitlich gesteuert gedämpft wird, wobei die zeitliche Abfolge der Dämpfung der im Speicherbaustein 19 gespeicherten Codefolge entspricht.

Der Hauptempfänger 6 in der Steuereinheit 1 ist dazu in der Lage, diese Dämpfung des Hauptfeldes 5 zu messen und der Codeerkennungs-Auswerteeinheit 7 ein entsprechendes Signal zur Verfügung zu stellen. Die Codeerkennungs-Auswerteeinheit überprüft dann, ob die zeitliche Abfolge der Dämpfung einem in der Codeerkennungs-Auswerteeinheit 7 gespeicherten Code entspricht und gibt dann ein Ausgangssignal A ab, wenn Identität beider Codes vorliegt.

### Bezugszeichen

- 1: Steuereinheit
- 2: Hauptsender
- 3: Hauptoszillator
- 4: Hauptantenne
- 5: Hauptfeld
- 6: Hauptempfänger
- 7: Codeerkennungs-Auswerteeinheit
- 8: Hilfssender
- 9: Hilfsoszillator
- 10: Hilfsantenne
- 11: Hilfsfeld
- 12: Hilfsempfänger
- 13: Annäherungserkennungs-Auswerteeinheit
- 14: Impulsgenerator
- 15: Transponder-Element
- 16: Spule
- 17: Kondensator
- 18: Gleichrichter
- 19: Speicherbaustein
- 20: Schalter

## Patentansprüche

1. Identifikationssystem mit einer Steuereinheit (1) und einem von dieser Einheit (1) räumlichen entfernten Transponder-Element (15), bei dem
- ein Hauptsender (2) der Steuereinheit (1) mittels eines Hauptoszillators (3) und einer von diesem beaufschlagen Hauptantenne (4) ein elektromagnetisches Hauptfeld (5) erzeugt,
- das Transponder-Element (15) eine zeitliche variable Dämpfung dieses Hauptfeld (5) bewirkt, wobei der zeitliche Verlauf dieser Dämpfung abhängig von einer im Transponder-Element (15) gespeicherten Codefolge ist, und
- ein Hauptempfänger (6) der Steuereinheit (1) ein Signal generiert, dessen zeitlicher Verlauf dem zeitlichen Verlauf der bewirkten Dämpfung des Hauptfeldes (5) entspricht,
- zusätzlich zum Hauptsender (2) ein Hilfssender (8)vorgesehen ist
- eine Annäherungserkennungs-Auswerteeinheit (13) für den Hauptsender (2) vorgesehen ist,
- der Hilfssender einen Hilfsoszillator umfasst,
**dadurch gekennzeichnet, dass**
- zusätzlich zum Hauptempfänger (6) ein Hilfsempfänger (12) vorgesehen ist
- der Hilfsempfänger (12) zur Ermittlung einer durch das Transponder-Element (15) bewirkten Dämpfung des Hilfsfeldes (11) dient,
- der Hilfsempfänger (12) ein der Dämpfung entsprechendes Signal an die Annäherungserkennungs-Auswerteeinheit (13) weitergibt und die Annäherungserkennungs-Auswerteeinheit (13) ein Steuersignal an den Hauptsender (12) absetzt.
- zusätzlich zur Hauptantenne eine Hilfsantenne vorgesehen ist,
- der Hilfsoszillator die Hilfsantenne beaufschlagt,
- die Hilfsantenne (10) ein elektromagnetisches Hilfsfeld (11) erzeugt,
- die Annäherungserkennungs-Auswerteeinheit (13) derart ausgelegt ist, das eine Aktivierung des Hauptsenders (2) dann bewirkt wird, wenn die Spltzenamplituden des Hilfsfeldes (11) über eine vorbestimmte Zeitspanne unterhalb eines vorbestimmten Schwellwerts liegen, und
- der Transponder ausschließlich durch das Hauptfeld (5) aktivierbar ist, um in Abhängigkeit von der im Transponder-Element (15) gespeicherten Codefolge die zeitliche variable Dämpfung dieses Hauptfeld (5) zu bewirken,
- die Energie des Hilfsfeldes (11) zumindest um einen Faktor 100 geringer ist als die Energie des Hauptfeldes (5).

2. Identifikationssystem nach Anspruch 1,
**dadurch gekennzeichnet,**
**daß** die Energie des Hilfsfeldes (11) zumindest um einen Faktor 1000 geringer ist als die Energie des Hauptfeldes (5).

3. Identifikationssystem nach Anspruch 1 oder 2,
**dadurch gekennzeichnet, daß**
die Energie des Hilfsfeldes (11) so gering gewählt ist, daß das Hilfsfeld (11) kein Auslesen der im Transponder-Element (15) gespeicherten Codefolge bewirken kann.

4. Identifikationssystem nach einem der Ansprüche 1 bis 3,
**dadurch gekennzeichnet,**
**daß** die Hauptantenne (4) mit einer Leistung zwischen 10 mW und 1W betrieben wird.

5. Identifikationssystem nach Anspruch 4,
**dadurch gekennzeichnet,**
**daß** die Hauptantenne (4) mit einer Leistung zwischen 50 mW und 0,5 W betrieben wird.

6. Identifikationssystem nach einem der Ansprüche 4 oder 5,
**dadurch gekennzeichnet,**
**daß** Hilfsantenne (10) mit einer Leistung zwischen 0,1 mW und 0,5 mW betrieben wird.

7. Identifikationssystem nach einem der Ansprüche 1 bis 6,
**dadurch gekennzeichnet,**
**daß** der Hilfssender (8) abwechselnd in einem Einschalt- und einem Pausenintervall betreibbar ist.

8. Identifikationssystem nach Anspruch 7,
**dadurch gekennzeichnet,**
**daß** die Zeitdauer des Pausenintervalls zwischen 0,05s und ls beträgt.

9. Identifikationssystem nach Anspruch 8,
**dadurch gekennzeichnet,**
**daß** die Zeitdauer des Pausenintervalls zwischen 0,1s und 0,5s beträgt.

10. Identifikationssystem nach Anspruch 9,
**dadurch gekennzeichnet,**
**daß** die Zeitdauer des Pausenintervalls 0,25s beträgt.

11. Identifikatlonssystem nach einem der Ansprüche 7 bis 10,
**dadurch gekennzeichnet,**
**daß** die Zeitdauer des Einschaltintervalls zwischen 0,01 ms und 1 ms beträgt.

12. Identiflkationssystem nach einem der Ansprüche 7 bis 11,
**dadurch gekennzeichnet,**
**daß,** die Zeitdauer des Einschaltintervalls zwischen 0,05ms und 0,5ms beträgt.

13. Identifikationssystem nach einem der Ansprüche 7 bis 12,
**dadurch gekennzeichnet,**
**daß,** die Zeitdauer des Einschaltintervalls 0,1ms beträgt.

14. Identifikationssystem nach einem der Ansprüche 1 bis 13,
**dadurch gekennzeichnet,**
**daß** die Hauptantenne (4) und/oder die Hilfsantenne (10) von einer Batterie, einem Akkumulator oder einem Festnetz gespeist werden.

## Claims

1. Identification system with a control unit (1) and a transponder element (15) spatially remote from this unit (1), in which
- a main transmitter (2) of the control unit generates an electromagnetic main field (5) by means of a main oscillator (3) and a main antenna (4) acted upon by the main oscillator,
- the transponder element (15) causes a temporally variable attenuation of this main field (5), with the temporal run of this attenuation being dependent upon a code sequence stored in the transponder element (15),
- a main receiver (8) of the control unit (1) generates a signal, the temporal run of which corresponds to the temporal run of the caused attenuation of the main field (5),
- an auxiliary transmitter (8) is provided in addition to the main transmitter (2),
- an approach-detecting evaluation unit (13) is provided for the main transmitter (2),
- the auxiliary transmitter comprises an auxiliary oscillator,
**characterized in that**
- an auxiliary receiver (12) is provided in addition to the main receiver (6),
- the auxiliary receiver (12) serves to determine an attenuation of the auxiliary field (11) caused by the transponder element (15),
- the auxiliary receiver (12) relays a signal corresponding to the attenuation to the approach-detecting evaluation unit (13), and the approach-detecting evaluation unit (13) emits a control signal to the main transmitter (12),
- an auxiliary antenna is provided in addition to the main antenna,
- the auxiliary oscillator acts upon the auxiliary antenna,
- the auxiliary antenna (10) generates an electro-magnetic auxiiary field (11),
- the approach-detecting evaluation unit (13) is configured so that an activation of the main transmitter (2) is effected when the peak amplitudes of the auxiliary field (11) are below a predetermined threshold value for a predetermined period of time, and
- the transponder is adapted to be activated exclusively by the main field (5), to cause the temporally variable attenuation of the main field (5) in dependence upon the code sequence stored in the transponder element (15),
- the energy of the auxiliary field (11) is less than the energy of the main field (5), at least by a factor of 100..

2. Identification system according to claim 1,
**characterized in that**
the energy of the auxiliary field (11) is less than the energy of the main field, at least by a factor of 1000.

3. Identification system according to claim 1 or 2,
**characterized in that**
the energy of the main field (11) is chosen to be so small that the auxiliary field (11) can cause no read-out of the code sequence stored in the transponder element (15).

4. Identification system according to any one of claims 1 to 3,
**characterized in that**
the main antenna (4) is operated at a power between 10 mW and 1 W.

5. Identification system according to claim 4,
**characterized in that**
the main antenna (4) is operated at a power between 50 mW and 0,5 W.

6. Identification system according to any one of claims 4 or 5,
**characterized in that**
the auxiliary antenna (10) is operated at a power between 0.1 mW and 0,5 mW.

7. Identification system according to any one of claims 1 to 6,
**characterized in that**
the auxiliary transmitter (8) is adapted to be operated alternately for a switched-on period and a pause period.

8. Identification system according to claim 7,
**characterized in that**
the duration of the pause period is between 0.05 s and 1 s.

9. Identifiication system according to claim 8,
**characterized in that**
the duration of the pause period is between 0.1 s and 0.5 s.

10. Identification system according to claim 9,
**characterized in that**
the duration of the pause period is 0,25 s.

11. Identification system according to any one of claims 7 to 10,
**characterized in that**
the duration of the switched-on period is between 0,01 ms and 1 ms.

12. Identification system according to any one of claims 7 to 11,
**characterized in that**
the duration of the switched-on period is between 0,05 ms and 0,5 ms.

13. Identification system according to any one of claims 7 to 12,
**characterized in that**
the duration of the switched-on period is 0,1 ms.

14. Identification system according to any one of claims 1 to 13,
**characterized in that**
the main antenna (4) and/or the auxiliary antenna (10) are fed from a battery, an accumulator, or a fixed line.

## Revendications

1. Système d'identification avec une unité de commande (1) et un élément transpondeur (15) éloigné dans l'espace de cette unité (1) et dans lequel
- un émetteur principal (2) de l'unité de commande (1) génère un champ magnétique principal (5) au moyen d'un oscillateur principal (3) et d'une antenne principale (4) alimentée par ledit oscillateur principale,
- l'élément transpondeur (15) provoque un amortissement de ce champ principal (5) variable dans le temps, ladite variation dans le temps de cet amortissement étant assujettie à une séquence codée mémorisée dans l'élément transpondeur (15), et
- un récepteur principal (6) de l'unité de commande (1) génère un signal dont la variation dans le temps correspond à la variation dans le temps de l'amortissement du champ principal (5),
- en complément de l'émetteur principal (2) est prévu un émetteur auxiliaire (8),
- une unité d'exploitation des données de reconnaissance d'approche (13) pour l'émetteur principal (2) est prévue,
- l'émetteur auxiliaire comprend un oscillateur auxiliaire,
**caractérisé par le fait que**
- en complément du récepteur principal (6), est prévu un récepteur auxiliaire (12)
- le récepteur auxiliaire (12) sert à détecter un amortissement du champ auxiliaire (11) créé par l'élément transpondeur (15),
- le récepteur auxiliaire (12) envoie un signal correspondant à l'amortissement vers l'unité d'exploitation des données de reconnaissance d'approche (13), et l'unité d'exploitation des données de reconnaissance d'approche (13) émet un signal de commande à l'émetteur principal (12),
- une antenne auxiliaire est prévue en complément de l'antenne principale,
- l'oscillateur auxiliaire alimente l'antenne auxiliaire,
- l'antenne auxiliaire (10) génère un champ magnétique auxiliaire (11),
- l'unité d'exploitation des données de reconnaissance d'approche (13) est conçue de telle sorte que l'activation de l'émetteur principal (2) est effectuée lorsque les amplitudes de pointe du champ auxiliaire (11) se situent au-dessous d'une valeur préallouée pendant une durée supérieure à une durée préallouée, et que
- le transpondeur ne peut être activé que par le champ principal (5) afin de provoquer un amortissement de ce champ principal (5) variable dans le temps en fonction de la séquence codée mémorisée dans l'élément transpondeur (15),
- l'énergie du champ auxiliaire (11) est plus faible, d'au moins un facteur 100, par rapport à l'énergie du champ principal (5).

2. Système d'identification selon la revendication 1, **caractérisé par le fait que** l'énergie du champ auxiliaire (11) est plus faible, d'au moins un facteur 1000, par rapport à l'énergie du champ principal (5).

3. Système d'identification selon revendication 1 ou 2, **caractérisé par le fait que** l'énergie du champ auxiliaire (11) est choisie si faible que le champ auxiliaire (11) ne peut provoquer l'appel de la séquence codée mémorisée dans l'élément transpondeur (15).

4. Système d'identification selon une des revendications 1 à 3, **caractérisé par le fait que** l'antenne principale (4) est exploitée avec une puissance comprise entre 10 mW et 1 W.

5. Système d'identification selon la revendication 4, **caractérisé par le fait que** l'antenne principale (4) est exploitée avec une puissance comprise entre 50 mW et 0,5 W.

6. Système d'identification selon une des revendications 4 ou 5, **caractérisé par le fait que** l'antenne auxiliaire (10) est exploitée avec une puissance comprise entre 0,1 mW et 0,5 mW.

7. Système d'identification selon une des revendications 1 à 6, **caractérisé par le fait que** l'émetteur auxiliaire (8) est exploitable en intervalles alternatifs de mise en circuit et de pause.

8. Système d'identification selon la revendication 7, **caractérisé par le fait que** la durée de l'intervalle de pause est comprise entre 0,05 s et 1 s.

9. Système d'identification selon la revendication 8, **caractérisé par le fait que** la durée de l'intervalle de pause est comprise entre 0,1 s et 0,5 s.

10. Système d'identification selon la revendication 9, **caractérisé par le fait que** la durée de l'intervalle de pause est de 0,25 s.

11. Système d'identification selon une des revendications 7 à 10, **caractérisé par le fait que** la durée de mise en circuit est comprise entre 0,01 ms et 1 ms.

12. Système d'identification selon une des revendications 7 à 11, **caractérisé par le fait que** la durée de mise en circuit est comprise entre 0,05 ms et 0,5 ms.

13. Système d'identification selon une des revendications 7 à 12, **caractérisé par le fait que** la durée de mise en circuit est de 0,1 ms.

14. Système d'identification selon une des revendications 1 à 13, **caractérisé par le fait que** l'antenne principale (4) et/ou l'antenne auxiliaire (10) sont alimentées par une pile, un accu ou un réseau fixe.
